Europäisches Patentamt

European Patent Office

Office européen des brevets

(11) Publication number: **0 454 857 A1**

# EUROPEAN PATENT APPLICATION
## published in accordance with Art. 158(3) EPC

(21) Application number: 90916361.0

(22) Date of filing: 08.11.90

(86) International application number:
PCT/JP90/01447

(87) International publication number:
WO 91/07762 (30.05.91 91/12)

(51) Int. Cl.⁵: **H01C 7/02, H02K 11/00**

(30) Priority: **13.11.89 JP 292397/89**

(43) Date of publication of application:
**06.11.91 Bulletin 91/45**

(84) Designated Contracting States:
**DE FR GB IT**

(71) Applicant: **NKK CORPORATION**
**1-2, Marunouchi 1-chome Chiyoda-ku**
**Tokyo 100(JP)**

(72) Inventor: **TAJIMA, Kazuo**
**NKK Corporation 1-2, Marunouchi 1-chome**
**Chiyoda-ku Tokyo 100(JP)**

(74) Representative: **Gregory, Timothy Mark et al**
**Urquhart-Dykes & Lord Midsummer House**
**411C Midsummer Boulevard**
**Central Milton Keynes MK9 3BN(GB)**

(54) **SMALL DC MOTOR.**

(57) A small DC motor having a PTC thermistor of a BaTiO₃ ceramic connected in series with its armature winding within the motor casing. The thermistor has a ratio $V_B/\rho_{25}$ in the range of 7 to 20.

TECHNICAL FIELD

The present invention relates to a small-sized direct-current motor in which a PTC (which is an abbreviation of positive temperature coefficient) thermistor used as a thermostatic heating element, a thermosensor, a current limiting element, etc. is provided as a overload protection element within a housing of a small-sized direct-current motor.

BACKGROUND OF THE INVENTION

Heretofore, mainly bimetal, PTC thermistor, etc. are wellknown as overcurrent protection elements for use for protection of a small-sized motor from overloading. In particular, centering the field of car industry, there is a tendency of increase in the quantity of use thereof.

Among these, bimetal is mainly connected to a motor not smaller than 40 mm ⌀, that is, having an overload current not smaller than about 3 - 4A. In general, bimetal is disposed inside the motor. In general, the accuracy in the switching operation of this bimetal is low against an overload current not larger than 3 - 4A, so that this bimetal cannot operate stably. Therefore, PTC thermistor is widely used for a motor not smaller than 3 - 4A, that is, smaller than 40 mm ⌀.

As known well, the PTC thermistor is a resistance element having a positive temperature coefficient. Though the resistance value of the PTC thermistor is low at ordinary temperature, the resistance value is rapidly increased by $10^4$ times - $10^7$ times when the temperature of the PTC thermistor is increased to a predetermined switching temperature or higher by self-heating caused by the overcurrent, heat conduction from a heat source, etc.

In most general, $BaTiO_3$ ceramics are known. Further, $V_2O_3$ ceramics, resin PTC thermistor formed by making a polyolefin resin contain electrically conductive particles such as carbon black, etc. are known.

On the other hand, the characteristics of barium titanate PTC ceramics are as follows: small resistivity at room temperature; large resistance change rate; large resistance-temperature coefficient; high voltage bearing; etc. Among these, the characteristics required of PTC ceramics used as a current limiting element are a small resistivity as possible and a high withstanding voltage. This is because an element of lower resistance can be produced when resistivity is small, in comparison between elements with the same rated voltage, and because not only a thinner and smaller-sized element can be produced but the element can be used in a higher voltage circuit when a withstanding voltage is high.

Heretofore, a lot of proposals about the composition and producing method of barium titanate PTC ceramics have been made. In any case, a withstanding voltage decreases as a resistivity decreases. On the other hand, there is a disadvantage in that a resistivity increases as a withstanding voltage increases.

Accordingly, the withstanding voltage of conventional low-resistance barium titanate PTC ceramics is about 20 - 30 V/mm for a resistivity of 5 Ωcm and about 40 - 60 V/mm for a resistivity of 10 Ωcm. From the point of view of the ratio ($V_B/\rho_{25}$) of the withstanding voltage to the resistivity, the ratio is, in any case, about 4 - 6 or smaller. In short, the withstanding voltage relative to the resistivity is so small that the ceramics cannot be used practically.

The conventional barium titanate PTC ceramics contain: BaO and $TiO_2$ as main components; SrO and PbO as Curie point shifters; $Sb_2O_3$, $Nb_2O_5$ and rare-earth elements as valence control agents; MnO as a resistance-temperature coefficient improvement agent; and $SiO_2$ and $Al_2O_3$ as sintering assistants. In production of such PTC ceramics, there is employed a method comprising the steps of: wet-mixing various raw materials; preparatorily burning the mixture at a temperature of about 1000 - 1200 °C to crystallize $BaTiO_3$ by a so-called solid-phase reaction technique; pulverizing the crystallized substance; molding the pulverized substance to a desired shape; and fully burning the molding at a temperature of about 1300 - 1400 °C.

A barium titanate semiconductor ceramic composition particularly high in withstanding voltage and excellent in durability against a rush current is disclosed in Japanese Patent Postexamin. Publication No. Sho-63-28324. The disclosed PTC ceramics are improved in withstanding voltage by substituting Pb and Sr as Curie point shifters for a part of Ba in barium titanate simultaneously and making the ceramics contain Ca. According to the above Japanese Patent Postexamin. Publication, $BaCO_3$, $Pb_3O_4$, $SrCO_3$, $CaCO_3$ and $TiO_2$ are used as starting raw materials. Further, $MnCO_3$ and $SiO_2$ as semiconductor-forming agents are mixed at a mixture rate and added to the starting materials. After wet-mixing, the ceramic composition is produced by crystallizing the mixture as barium titanate ceramics by a so-called solid-phase reaction technique.

As described above, the PTC thermistor used as a current limiting element in a conventional small-sized direct-current motor is composed of semiconductor ceramics containing $BaTiO_3$ as a main compo-

nent. From the limitation of material characteristics to the resistivity of 8 Ωcm or larger and the withstanding voltage of 30 - 40 V/mm, a material having a diameter of 10 - 12 mm ⌀ or larger and a thickness of about 1 mm is, in general, used as a disk-like part with lead wire. Accordingly, the PTC thermistor can be connected to a small-sized direct-current motor in series but it cannot be disposed inside the motor because of the size thereof. In short, the PTC thermistor is generally used under the condition that it is mounted on a control circuit substrate.

As described above, in the conventional small-sized direct-current motor to be used with additional provision of the PTC thermistor, however, the PTC thermistor used is relatively large in size because of the limitation of the characteristics thereof. Accordingly, there is a present situation in which the motor is used with the PTC thermistor mounted on a circuit substrate, because the thermistor cannot be disposed inside the motor though the thermistor is connected to an armature of the motor in series.

To avoid labors for mounting the PTC thermistor, therefore, development of a small-sized direct-current motor with a built-in overload protection element (current limiting element) used as a small-sized motor smaller than 40 mm ⌀ has been demanded from the field of car industry particularly requiring reduction both in size and in weight.

The largest barrier to disposing of the PTC thermistor inside the conventional small-sized direct-current motor is, however, in that the conventional PTC has not material characteristics sufficient to be disposed inside the motor from the point of view of the size thereof. In the following, problems on the characteristics of the conventional PTC thermistor are described.

In respect to the withstanding voltage characteristic of the aforementioned conventional PTC ceramics, the PTC ceramics small in resistivity exhibits a withstanding voltage $V_B$ of about 200 - 250 V/mm but the resistivity thereof at room temperature is 40 - 50 Ωcm at maximum. From the point of view of the ratio ($V_B/\rho_{25}$) of withstanding voltage to resistivity, the ratio is substantially in a range of 4 to 6, so that it cannot be said that the withstanding voltage for the resistivity is out of the conventional range.

In general, it is known that the improvement in withstanding voltage of barium titanate PTC ceramics can be attained by reducing the crystal particle diameter of the ceramics to be as small as possible. Upon this phenomenon, the following various improvements (1) - (3) have been made in the prior art.

(1) A component having a crystal particle growth suppressing effect and a uniformizing effect is added.

(2) The particle size is made uniform and fine by pulverization after preparatory burning.

(3) The full-burning temperature is suppressed to be as low as possible.

In particular, the characteristic of the aforementioned prior art is in that the producing method is started from raw materials prepared by a solid-phase reaction technique. That is, desired ceramics is produced by the steps of: mixing metal carbonates, metal oxides, etc. used as raw materials in a predetermined proportion; and crystallizing the mixture by a so-called solid-phase reaction technique after wet-mixing.

Even in any conventional method, however, PTC ceramics with a low resistivity and a high withstanding voltage cannot be produced because the mean crystal particle diameter can be reduced to about 10 μm to contribute to the improvement in withstanding voltage but at the same time the resistivity increases.

## DISCLOSURE OF THE INVENTION

An object of the present invention is to provide a small-sized direct-current motor in which a PTC thermistor formed of a barium titanate ($BaTiO_3$) PTC ceramic composition being relatively small in resistivity and relatively high in withstanding voltage at room temperature is disposed as a current limiting element inside the motor. To attain this object, $BaTiO_3$ ceramic materials having a mean particle diameter of 10 μm or smaller and having an ordinary-temperature resistivity $\rho_{25}$ of 3 - 10 Ωcm and a withstanding voltage $V_B$ of 40 - 200 V/mm, that is, the ratio ($V_B/\rho_{25}$) of the withstanding voltage to the resistivity of 7 or larger, are provided to form a small-sized PTC thermistor having characteristics suitable for a built-in PTC thermistor from these materials to use the small-sized PTC thermistor as a built-in PTC thermistor.

In the small-sized direct-current motor according to the present invention, a PTC thermistor of $BaTiO_3$ ceramics in which the ratio $V_B/\rho_{25}$ of withstanding voltage to ordinary-temperature resistivity $\rho_{25}$ is from 7 to 20 is connected to an armature coil in a series and disposed inside a motor housing. Here, the aforementioned built-in PTC thermistor can be suitably disposed within the motor housing by using the following first, second and third $BaTiO_3$ ceramic compositions (hereinafter also called "$BaTiO_3$ ceramics") as materials.

The first $BaTiO_3$ ceramics contains a main component represented by the formula ($Ba_{1-x-y-z}Sr_xPb_yCa_z$)-$TiO_3$, at least one element selected from the group consisting of Sb, Bi, Nb, Ta and rare-earth elements as a valence control agent in an amount of from 0.2 to 1.0 mole % relative to one mole of the main component, Mn in an amount of 0.02 to 0.08 mole % relative to one one mole of the main component, and Si in an amount of 3.0 mole % or smaller relative to one mole of the main component. The main component is a PTC ceramic composition consisting of 1-x-y-z : x : y : z mixture of $BaTiO_3$, $SrTiO_3$, $PbTiO_3$ and $CaTiO_3$ respectively synthesized by a liquid-phase solution reaction technique, in which x, y and z satisfy the ranges $0.02 \leq x \leq 0.25$, $0.01 \leq y \leq 0.3$ and $0.02 \leq z \leq 0.3$. This is called "a first PTC thermistor".

The second $BaTiO_3$ ceramics contains a main component represented by the formula $(Ba_{1-x-y-z}Sr_xPb_yCa_z)TiO_3$, at least one element selected from the group consisting of Sb, Bi, Nb, Ta and rare-earth elements as a valence control agent in an amount of from 0.2 to 1.0 mole % relative to one mole of the main component, Mn in an amount of 0.02 to 0.08 mole % relative to one one mole of the main component, and Si in an amount of 3.0 mole % or smaller relative to one mole of the main component. The main component is a PTC ceramic composition directly synthesized by a liquid-phase solution reaction technique, in which x, y and z satisfy the ranges $0.02 \leq x \leq 0.25$, $0.01 \leq y \leq 0.3$ and $0.02 \leq z \leq 0.25$. This is called "a second PTC thermistor".

The third $BaTiO_3$ ceramics contains a main component represented by the formula $(Ba_{1-x-y-z-a}Sr_xPb_yCa_zM_a)TiO_3$, or the formula $(Ba_{1-x-y-z}Sr_xPb_yCa_z)(Ti_{1-a}M_a)O_3$, at least one element selected from the group consisting of Sb, Bi, Nb, Ta and rare-earth elements as a valence control agent M in an amount of from 0.2 to 1.0 mole % relative to one mole of the main component, Mn in an amount of 0.02 to 0.08 mole % relative to one one mole of the main component, and Si in an amount of 3.0 mole % or smaller relative to one mole of the main component. The main component is a PTC ceramic composition directly synthesized by a liquid-phase solution reaction technique, in which x, y, z and a satisfy the ranges $0.02 \leq x \leq 0.25$, $0.01 \leq y \leq 0.3$, $0.02 \leq z \leq 0.25$ and $0.002 \leq a \leq 0.005$ respectively. This is called "a third PTC thermistor".

In the small-sized direct-current motor according to the invention, a plate-like PTC thermistor having electrodes on both surfaces is provided between a phosphorus bronze plate connected to a brush and an input terminal. Any one of the aforementioned first, second and third PTC thermistors may be used as a PTC thermistor disposed inside the motor.

In the small-sized direct-current motor according to another aspect of the invention, a PTC thermistor having electrodes at both ends is disposed inside the motor by inserting the PTC thermistor in between a motor brush and a phosphorus bronze plate connected to an input terminal. Any one of the aforementioned first, second and third PTC thermistors may be used as the PTC thermistor.

In the small-sized direct-current motor according to a further aspect of the invention, a cylinder-like PTC thermistor having electrodes at both end surfaces is disposed inside the motor by embedding the PTC thermistor in a terminal board of the motor and connecting one electrode to an input terminal and the other electrode to a phosphorus bronze plate connected to a brush or to a terminal connected thereto. Any one of the aforementioned first, second and third PTC thermistors may be used as the PTC thermistor.

Because the PTC thermistor used as a current limiting element connected to the armature of the small-sized direct-current motor in a series is made of $BaTiO_3$ ceramics having the material characteristic in which the ratio $V_B/\rho_{25}$ of withstanding voltage $V_B$ to ordinary-temperature resistivity $\rho_{25}$ is from 7 to 20, not only the resistivity $\rho_{25}$ is low but the withstanding voltage $V_B$ is high at room temperature. Accordingly, the size of the thermistor can be reduced so greatly that the thermistor can be disposed within the motor housing. For example, the PTC thermistor used in the small-sized direct-current motor according to the invention can be easily shaped like a plate being thin and small in area or like a small-sized cylinder. Accordingly, a PTC thermistor having the material characteristic in which the thermistor can be disposed inside the motor can be provided without spoiling the characteristic thereof as a current limiting element.

As described above, the $BaTiO_3$ ceramics excellent in material characteristic are characterized in that burning is utilized for so-called chemical technique materials as starting materials. The $BaTiO_3$ ceramics are provided as a result that the inventors has examined various producing methods using a main component of $BaTiO_3$ ceramics as a starting material and various compositions of additives such as a sintering assistant, etc. on the basis of the characteristics of chemical technique materials. That is, the chemical technique materials include: crystals of $BaTiO_3$, $SrTiO_3$, $PbTiO_3$, $CaTiO_3$, etc. produced by a liquid-phase solution reaction technique such as an oxalate technique, a hydroxide technique, a water-heat synthesizing technique, an alkoxide technique, etc.; solid solutions thereof; and mixed crystals thereof. The chemical technique materials have the following excellent features (4) - (6), compared with the raw materials (crystal powder) provided by a conventional solid-phase reaction technique.

(4) The particle size is fine and uniform, and the powder activity is high.

(5) The purity is high.

(6) The uniformity of the composition in molecular level is high.

The inventors have made various examinations upon starting raw materials for the main component of barium titanate PTC ceramics while paying attention to the characteristics of such chemical technique

EP 0 454 857 A1

materials. As a result, the knowledge that the amount of $SiO_2$ added as a sintering assistant to barium titanate PTC ceramics can be reduced compared with the case where raw materials prepared by the conventional solid-phase reaction technique are used has been attained.

On the basis of this knowledge, in particular, PTC ceramics having the resistivity $\rho_{25}$ reduced by one digit and having the withstanding voltage $V_B$ increased, that is, PTC ceramics having the $V_B/\rho_{25}$ of 7 or larger at room temperature, can be used as the PTC ceramics to be disposed inside the small-sized direct-current motor according to the invention compared with the convention barium titanate PTC ceramics, by using so-called chemical technique raw materials as starting materials instead of the conventional solid-phase reaction technique and finding compositions to make the best use of the characteristics of the chemical technique raw materials.

Because the chemical technique raw materials are generally high in purity and uniform and fine in particle size and, in particular, they have the characteristics in which the powder activity is high, $SiO_2$ is added as a liquid-phase sintering assistant generally in an amount of 0.5 to 2 mole % in the case where raw materials prepared by the conventional solid-phase reaction technique are used as starting materials. On the contrary, in the PTC ceramics used in the present invention, the $(V_B/\rho_{25})$ ratio of 7 or larger can be attained when the $SiO_2$ content is not smaller than 3 mole %. Above all, by using chemical technique raw materials as starting materials, not only sintering occurs even when there is no $SiO_2$ added as a liquid-phase sintering assistant but the $(V_B/\rho_{25})$ ratio of 7 or larger can be attained for the crystal particle diameter of 10 $\mu$m or smaller even when the $SiO_2$ content is increased to 3 mole %. Accordingly, the crystal particle diameter of the ceramics is reduced to 10 $\mu$m or smaller, so that the withstanding voltage becomes high. In general ceramics, $SiO_2$ forms a grain boundary precipitation phase as a glass phase. This phase is small in electrical conductivity, so that the ceramics can be used as the built-in PTC thermistor in the present invention even if the ordinary-temperature resistivity of the ceramic element is increased by increasing the $SiO_2$ considerably.

In this case, the reason why respective elements added to the PTC ceramics are limited for the $(V_B/\rho_{25})$ of 7 or larger is as follows.

When x is smaller than 0.1, not only Sr is insufficient in electrical characteristic but there is a tendency to reduce mechanical/thermal strength. When x is larger than 0.25, the Curie point is reduced to 80 °C or smaller so that the ceramics cannot be practically used as a current limiting element.

When y is not larger than 0.01, the effect of the improvement in characteristic decreases as the withstanding voltage increases. When y is larger than 0.3, the Curie point is increased to 150 °C or larger so that not only the ceramics cannot be practically used as a current limiting element but there is a tendency to increase the resistivity at ordinary temperature reversely.

When z is not larger than 0.02, the effect on uniformity and fineness, that is, the effect on high withstanding voltage, is eliminated. When z is larger than 0.25, the resistivity increases.

When the amount of the valence control agent is smaller than 0.2 mole % or when the amount is larger than 1.0 mole %, that is, when the amount is out of the range of 0.2 to 1.0 mole %, there is a tendency to increase resistance.

When the Mn content is smaller than 0.02 mole %, the resistance-temperature coefficient in the PTC region is reduced to 8%/°C or smaller so that the ceramics cannot be used practically. When the Mn content is larger than 0.08 mole %, the ordinary-temperature resistivity increases rapidly.

When the $SiO_2$ content is larger than 3.0 mole %, the ordinary-temperature resistivity increases to be disagreeable with the object of the invention, so that the ceramics cannot be used practically.

## BRIEF DESCRIPTION OF THE DRAWINGS

Fig. 1 is a structural explanatory view showing an embodiment of a small-sized direct-current motor according to the present invention;

Fig. 2 is a structural explanatory view of a small-sized direct-current motor according to the present invention in which a PTC thermistor is to be built-in;

Fig. 3 is a view of measurement data showing the result of examination of the change of a circuit current with the passage of time in the case where the motor in the embodiment of Fig. 1 is locked;

Fig. 4 is a view of comparative data showing the change of a circuit current with the passage of time in the case where a conventional small-sized direct-current motor having a PTC thermistor on the outside is locked;

Fig. 5 is a structural explanatory view of a small-sized direct-current motor showing another embodiment of the invention;

Fig. 6 is a view of measurement data showing the result of examination in the embodiment of Fig. 5;

5

Fig. 7 is a structural explanatory view of a small-sized direct-current motor showing a further embodiment of the invention;

Fig. 8 is a flow chart showing a first PTC thermistor producing method according to the invention;

Fig. 9 is a flow chart showing a second PTC thermistor producing method according to the invention; and

Fig. 10 is a flow chart showing a third PTC thermistor producing method according to the invention.

THE BEST MODE FOR EMBODYING THE INVENTION

(Embodiment 1)

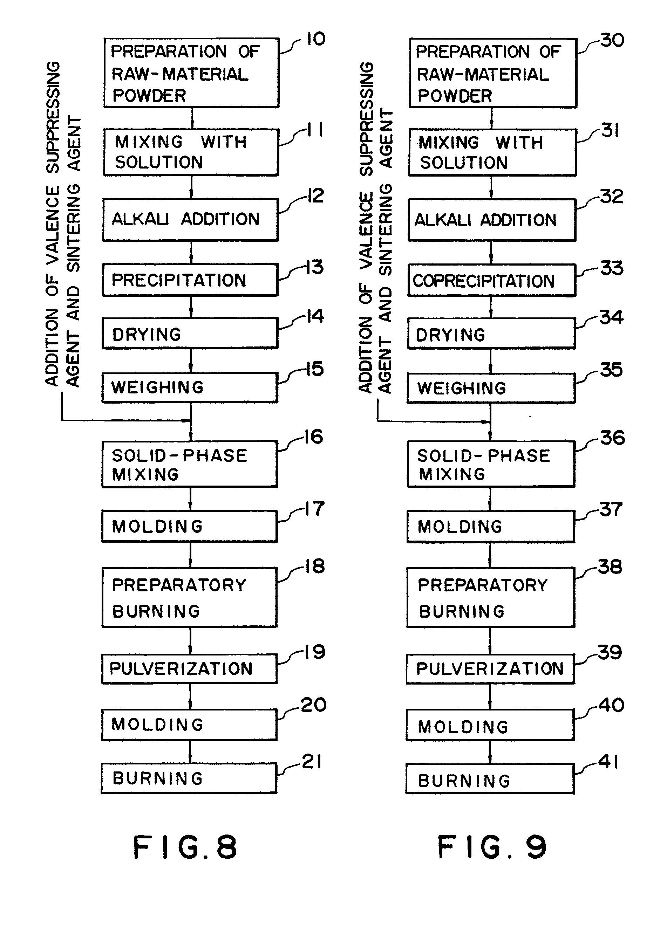

In this embodiment, three methods for producing a PTC thermistor disposed inside a small-sized direct-current motor according to the present invention will be described. Table 1 shows ceramic compositions of PTC ceramics both in embodiments of the invention and in comparative examples. (First Method) Fig. 8 is a flow chart showing a method for producing PTC ceramics adapted to a first PTC thermistor (used in Claim 2) used in a small-sized direct-current motor according to the present invention.

Raw-material powder is respectively prepared to synthesize $BaTiO_3$, $SrTiO_3$, $PbTiO_3$ and $CaTiO_3$ by a liquid-phase solution reaction technique (step 10). Among these, $BaTiO_3$, $SrTiO_3$ and $CaTiO_3$ are synthesized from $BaCO_3$, $SrCO_3$, $CaCO_3$ and $TiO_2$ as raw materials by the oxalate technique. On the other hand, $PbTiO_3$ is synthesized from $PbO$ and $TiO_2$ as raw materials by the water-heat synthesizing technique. Only synthesizing of $BaTiO_3$ will be described hereinbelow for the purpose of simplification of description.

$BaCO_3$ powder and $TiO_2$ powder are added to a predetermined solution and stirred fully (step 11).

A predetermined alkali solution is added to the mixture solution (step 12).

$BaTiO_3$ is precipitated by interaction of $BaCO_3$, $TiO_2$ and the respective solutions (step 13).

The precipitate is heated to a predetermined temperature and dried (step 14).

The dried substance is ground and weighed. Here, $BaTiO_3$, $SrTiO_3$, $PbTiO_3$ and $CaTiO_3$ are respectively weighed to prepare composition Nos. 5 - 33 in Table 1 (step 15).

Four kinds of titanates are mixed thereto in a solid state. Then, at least one element selected from the group consisting of rare-earth elements such as La, Y, etc. and Sb, Bi, Nb and Ta as a valence control agent, $MnCO_3$ as a resistance-temperature coefficient improvement agent and $SiO_2$ as a sintering assistant are added thereto in suitable amounts, respectively (step 16).

The mixture is ground for about ten hours by a ball mill and then dried by dehydration. About 3 cc of 6% PVA is added to 100g of each sample. The resulting mixture is molded under the molding pressure of 1000 $kg/cm^3$ to form a pellet having a diameter of 15 mm and a thickness of 1.5 mm (step 17).

The pellet is preparatorily burned at a predetermined temperature (step 18).

After preparatory burning, the pellet is pulverized (step 19).

A binder is added to the pulverized substance to attain a molding of a desired shape (step 20).

The molding is fully burned. The condition for the full-burning is as follows: heating rate of 200 °C per hour and burning temperature of 1280 - 1340 °C. After burned for about an hour, the molding is naturally cooled in a furnace (step 21). Ag electrodes excellent in ohmic contact are baked in the thus prepared PTC ceramics to produce an element. The Curie point, ordinary-temperature resistivity and withstanding voltage of the element are measured respectively.

(Second Method) Fig. 9 is a flow chart showing a method for producing PTC ceramics adapted to a second PCT thermistor (used in Claim 3).

$BaCO_3$, $SrCO_3$, $PbO$, $CaCO_3$ and $TiO_2$ are prepared respectively (step 30). That is, respective raw-material powder is weighed to prepare composition Nos. 5 - 33 in Table 1.

The weighed raw-material powder is added to a predetermined solution and fully stirred (step 31).

A predetermined alkali solution is added to the mixture solution (step 32).

$(Ba_{1-x-y-z}Sr_xPb_yCa_z)TiO_3$ is coprecipitated by interaction of the respective raw-material powder and the respective solutions (step 33).

The precipitate is heated to a predetermined temperature and dried (step 34).

The dried substance is ground and weighed (step 35).

At least one element selected from the group consisting of rare-earth elements such as La, Y, etc. and Sb, Bi, Nb and Ta as a valence control agent, $MnCO_3$ as a resistance-temperature coefficient improvement agent and $SiO_2$ as a sintering assistant are added to the $(Ba_{1-x-y-z}Sr_xPb_yCa_z)TiO_3$ powder in suitable amounts, respectively (step 36).

The mixture is ground for about ten hours by a ball mill and then dried by dehydration. About 3 cc of 6% PVA is added to 100 g of each sample. The resulting mixture is molded under the molding pressure of

6

1000 kg/cm$^3$ to form a pellet having a diameter of 15 mm and a thickness of 1.5 mm (step 37).

The pellet is preparatorily burned at a predetermined temperature (step 38).

After preparatory burning, the pellet is pulverized (step 39).

A binder is added to the pulverized substance to attain a molding of a desired shape (step 40).

The molding is fully burned. The condition for the full-burning is as follows: heating rate of 200 °C per hour; and burning temperature of 1280 - 1340 °C. After burned for about an hour, the molding is naturally cooled in a furnace (step 41). Ag electrodes excellent in ohmic contact are baked in the thus prepared PTC ceramics to produce an element. The Curie point, ordinary-temperature resistivity and withstanding voltage of the element are measured respectively.

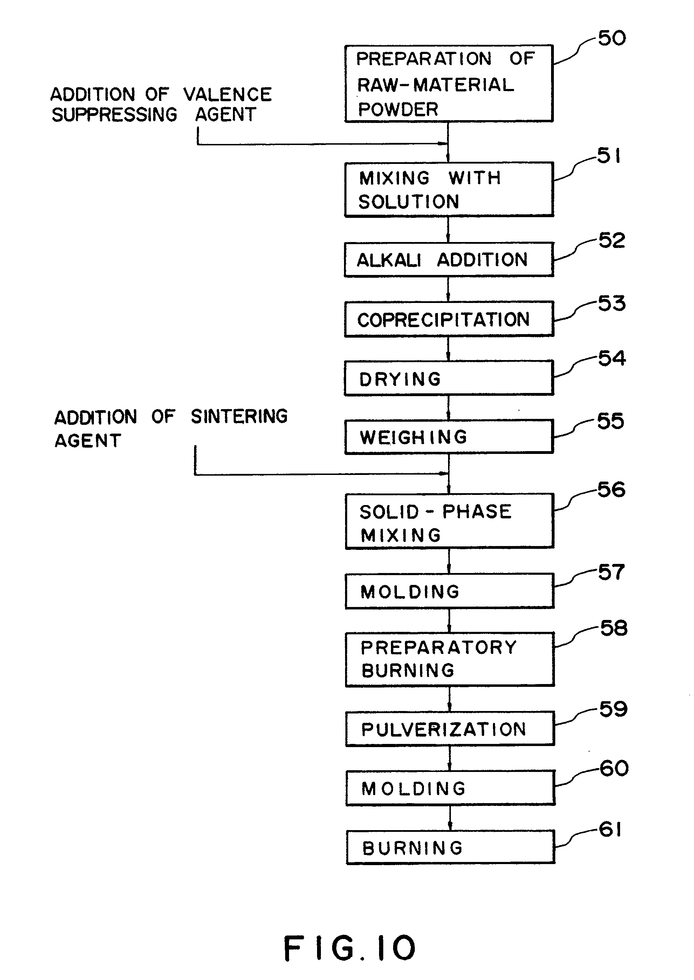

(Third Method) Fig. 10 is a flow chart showing a method for producing PTC ceramics adapted to a third PTC thermistor (used in Claim 3).

$BaCO_3$, $SrCO_3$, $PbO$, $CaCO_3$ and $TiO_2$ are prepared respectively (step 50). That is, respective raw-material powder is weighed to prepare composition Nos. 5 - 33 in Table 1.

A suitable amount of a valence control agent M is added to the weighed raw-material powder. The mixture is dissolved in a predetermined solution and fully stirred (step 51).

A predetermined alkali solution is added to the mixture solution (step 52).

$(Ba_{1-x-y-z-a}Sr_xPb_yCa_zM_a)TiO_3$, or $(Ba_{1-x-y-z}Sr_xPb_yCa_z)(Ti_{1-a}M_a)O_3$ is coprecipitated by interaction of the respective raw-material powder and the respective solutions (step 53).

The precipitate is heated to a predetermined temperature and dried (step 54).

The dried substance is ground and weighed (step 55).

$MnCO_3$ as a resistance-temperature coefficient improvement agent and $SiO_2$ as a sintering assistant are added to the $(Ba_{1-x-y-z-a}Sr_xPb_yCa_zMa)TiO_3$ powder or $(Ba_{1-x-y-z}Sr_xPb_yCa_z)(Ti_{1-a}M_a)O_3$ powder in suitable amounts, respectively, and mixed (step 56).

The mixture is ground for about ten hours by a ball mill and then dried by dehydration. About 3 cc of 6% PVA is added to 100 g of each sample. The resulting mixture is molded under the molding pressure of 1000 kg/cm$^3$ to form a pellet having a diameter of 15 mm and a thickness of 1.5 mm (step 57).

The pellet is preparatorily burned at a predetermined temperature (step 58).

After preparatory burning, the pellet is pulverized (step 59).

A binder is added to the pulverized substance to attain a molding of a desired shape (step 60).

The molding is fully burned. The condition for the full-burning is as follows: heating rate of 200 °C per hour; and burning temperature of 1280 - 1340 °C. After burned for about an hour, the molding is naturally cooled in a furnace (step 61). Ag electrodes excellent in ohmic contact are baked in the thus prepared PTC ceramics to produce an element. The Curie point, ordinary-temperature resistivity and withstanding voltage of the element are measured respectively.

(Fourth Method) Here, a method for producing PTC ceramics from raw materials by a conventional solid-phase reaction technique is described as a comparative example.

$BaCO_3$ powder, $SrCO_3$ powder, $PbO$ powder, $CaCO_3$ powder, $TiO_2$ powder, $Sb_2O_3$ powder, $MnCO_3$ powder and $SiO_2$ powder are respectively weighed, ground for ten hours by a ball mill and then dried by dehydration to prepare composition Nos. 1 - 4 in Table 1. After the mixture is primarily molded by adding 6% PVA thereto, the molding is preparatorily burned at 1050 °C for two hours. After preparatory burning, the molding is pulverized by a ball mill for ten hours and then dried by dehydration. Then, about 3 cc of 6% PVA is added to 100 g of each sample. The mixture is molded under the molding pressure of 1000 kg/cm$^2$ to prepare a pellet having a diameter of 15 mm and a thickness of 1.5 mm.

The condition for the full-burning is as follows: heating rate of 200 °C per hour; and burning temperature of 1300 °C. After burned for about an hour, the molding is naturally cooled in a furnace. Ag electrodes excellent in ohmic contact are baked in the thus prepared PTC ceramics to produce an element. The Curie point, the ordinary-temperature resistivity and the withstanding voltage of the element are measured respectively.

The respective producing conditions (compositions) and characteristic values in the embodiments described in (First Method), (Second Method) and (Third Method) and in the comparative example described in (Fourth Method) are collectively shown in Table 1. It is obvious from Table 1 that the first, second and third PTC ceramics are improved greatly in the ratio ($V_B/\rho_{25}$) of the withstanding voltage to the ordinary-temperature resistivity, compared with the comparative example, and that a large part of the PTC ceramics exhibit the $V_B/\rho_{25}$ ratio of 10 or larger. On the contrary, the ordinary-temperature resistivity $\rho_{25}$ in the comparative example is large as about 100 Ωcm though the comparative example satisfies the condition for composition defined in the present invention as No. 1. In the comparative examples Nos. 2 - 4, the ordinary-temperature resistivity $\rho_{25}$ is reduced to 40 Ω when $SiO_2$ is increased to 1 mole %, but it is reversely increased to 80 Ω when $SiO_2$ increased to 2 mole %. That is, it has been found that the PTC ceramics produced by the conventional method cannot clear the ordinary-temperature resistivity $\rho_{25}$ of 3 to 10 Ωcm and the withstanding voltage of 40 to 200V/mm attained in the PCT ceramics produced by the methods according to the invention.

(Embodiment 2)

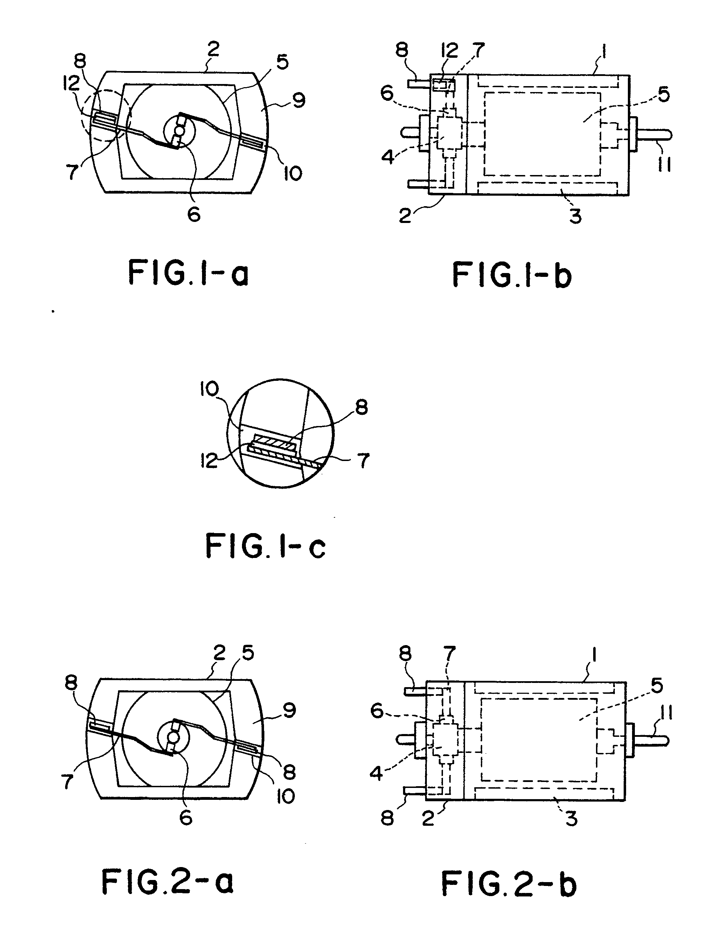

Fig. 2 shows a typical small-sized direct-current motor having a PTC thermistor inside the motor. Fig. 2-b is a vertical sectional view thereof. Fig. 2-a is a side view showing the inside thereof in the case where a small housing is detached. In the drawing, the reference numeral 1 designates a large housing and 2 a small housing for forming a terminal board. Field magnets 3 are fixed to the large housing 1. A commutator 4 is disposed in the small housing 2 and connected to an armature coil 5 formed within the large housing 1. The armature coil 5 is fixed to a shaft 11. The reference numeral 6 designates brushes which are brought into contact with the commutator 4. The brushes 6 are connected to input terminals 8 through phosphorus bronze plates 7 connected to the brushes 6. As shown in Fig. 2-a, the input terminals 8 are connected to the phosphorus bronze plates 7 fixed to grooves 10 provided in a resin 9 stuck to the inside of the small housing 2. Because Fig. 2-a shows the housing where the motor is removed from the large housing 1, the brushes 6 disconnected from the outer circumference of the commutator 4 are shown.

As described above, the small-sized direct-current motor shown in Fig. 2 is of a triode commutator type in which the input terminal plates of the motor, that is, the resin 9, and the phosphorus bronze plates 7 (hereinafter called "brush plates") respectively having the brushes 6 at their ends are arranged as shown in the drawing.

That is, the input terminal plates 8 and the brush plates 7 are inserted/fixed, by application of spot welding or the like, into the U-shaped grooves 10 which are formed on the resin 9 stuck to the inside of the terminal board 2 (hereinafter merely called "small housing") by which the the motor shaft 11 and the input terminal plates 9 are fixed, or which are directly formed in the inside of the small housing when the small housing 2 itself is made of the resin 9.

Fig. 1 is a structural explanatory view of a small-sized direct-current motor showing an embodiment of the invention (Claim 5). Fig. 1-a is a plan view showing the inside of the small housing. Fig. 1-b is a vertical sectional view of the small-sized direct-current motor. Fig. 1-c is an enlarged view of a groove 10 and its vicinity. In the drawing, the reference numerals 1 to 11 designate the same or like parts identified by the reference numerals in Fig. 2. Description thereof will be omitted.

While a rectangular plate-like PTC thermistor 12 having electrodes attached to both sides thereof is put between a plate of an input terminal 8 and a brush plate 7, the PTC thermistor 12 is fixed into the U-shaped groove 10 on the resin 9 stuck to the inside of the small housing 2 of a 12 V small-sized direct-current motor (20 mm ∅ ) with the inside resistance of about 18 Ω as shown in Fig. 2, thus to produce a small-sized direct-current motor with a built-in thermistor. Any one of the aforementioned, first, second and third PTC thermistors may be used as the PTC thermistor 12. In this embodiment, a rectangular thermistor having a size of 3.0 x 3.2 mm² and a thickness of 0.4 mm is used. The thermistor used in this embodiment has the ordinary-temperature resistance of 1.6 Ω (ordinary-temperature resistivity $\rho_{25}$ of about 4 Ωcm) and the withstanding voltage $V_B$ of 60 V/mm. That is, the thermistor in this embodiment is a PTC thermistor with the $V_B/\rho_{25} = 14.0$. In this embodiment, the switching temperature of the thermistor used is 100 °C.

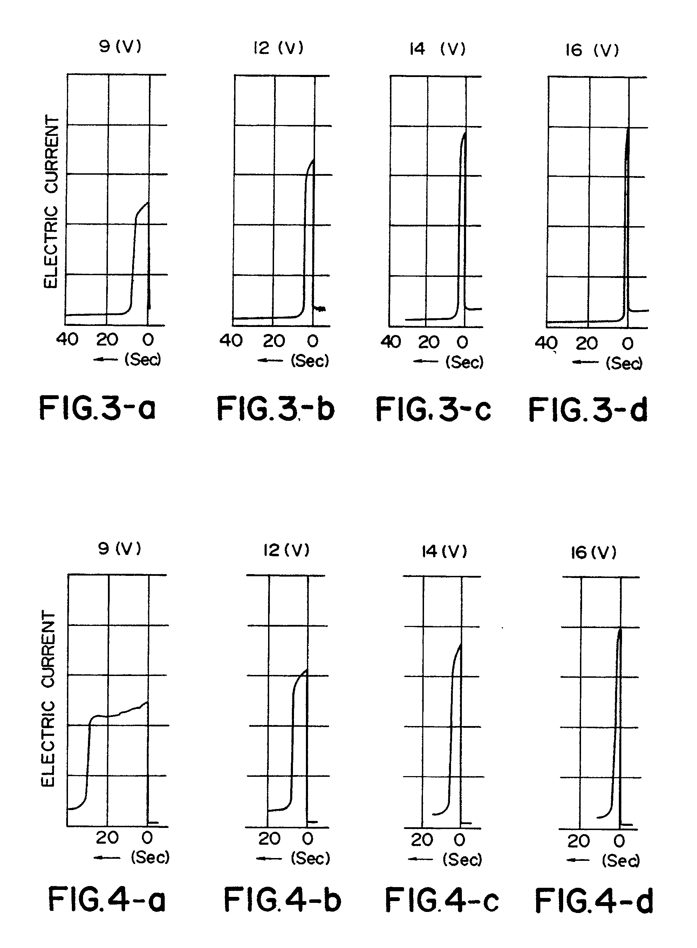

An examination is made by measuring the change of a circuit current with the passage of time under the condition that voltages of 9, 12, 14 and 16 V are successively applied between the input terminals 8 in an ordinary temperature after the shaft 11 of the small-sized direct-current motor shown in Fig. 1 is locked. The result of the examination is shown in Fig. 3. Fig. 3-a shows data in the case where the applied voltage is 9 V. Fig. 3-b shows data in the case where the applied voltage is 12 V. Fig. 3-c shows data in the case where the applied voltage is 14 V. Fig. 3-d shows data in the case where the applied voltage is 16 V. In the drawings, the ordinate shows a current, and the abscissa shows time after inputting (0 sec). It is obvious from Fig. 3 that an overcurrent flows with the application of the respective voltages but the current is reduced to 100 mA or less after 1.5 (16 V) sec. - 8 (9 V) sec. and that the PTC thermistor 12 operates effectively as a current limiting element to prevent the overheat of the motor.

(Comparative Example 1)

After lead wires are soldered to a PTC thermistor having the same material characteristic as used in the embodiment of Fig. 1, addition of molding is made to produce a PTC thermistor with conventional lead wires. The PTC thermistor is disposed in an external driving circuit (not shown) of the small-sized direct-current motor shown in Fig. 2 and connected in a series. The motor is subjected to the same examination as in the embodiment 1. The result of the examination is shown in Figs. 4-a, 4-b, 4-c and 4-d as a comparative example. It is apparent that the response time for current limitation is elongated to 3 sec. (16 V) - 25 sec. (9 V).

Comparing the result of Fig. 4 with the result of Fig. 3, the response time for current limitation in the motor with the built-in PTC thermistor according to the present invention is reduced to 1/2 - 1/3 with respect to the same voltage. Because not only the effect of heat binding is produced but a remarkable improvement of response characteristic is observed, it can be said that the effect of the built-in PTC thermistor is evident.

(Embodiment 3)

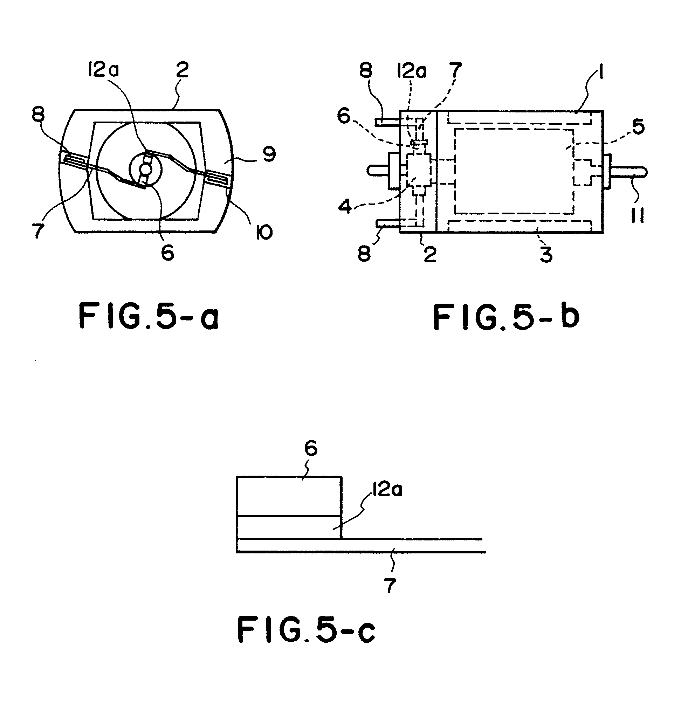

Fig. 5 is a structural explanatory view of a small-sized direct-current motor as an embodiment of the present invention (Claim 6). Fig. 5-a is a plan view showing the inside of the small housing. Fig. 5-b is a vertical sectional view of the motor. Fig. 5-c is a partly enlarged view of a brush. In the drawing, the reference numerals 1 to 11 designate the same or like parts as explained in the small-sized direct-current motor in Fig. 2. Description thereof will be omitted.

In the drawing, electrode surfaces not shown are provided on both surfaces of the respective brush 6 (2 x 2 mm², 1.5 mm thick) and on both surfaces of the respective rectangular plate-like (3 x 3 mm², 0.45 mm thick) PTC thermistor 12a (for example, the first PTC thermistor) in the small-sized direct-current motor shown in Fig. 2. One surface of the PTC thermistor 12a is stuck to one surface of the brush by a heat-resisting resin adhesive agent. The other surface of the PTC thermistor 12a is stuck to a phosphorus bronze plate 7 in the same manner, so that a so-called overload protecting function brush is formed as shown in Fig. 5-c in which the PTC thermistor 12a is sandwiched between the brush 6 and the phosphorus bronze plate 7. By this configuration, a small-sized direct-current motor with a built-in PTC thermistor is formed. The PTC thermistor 12a has ordinary-temperature resistance of about 2 Ω (resistivity of about 4 Ωcm) and the same material characteristic of switching temperature of 100 °C as in the embodiment of Fig. 1.

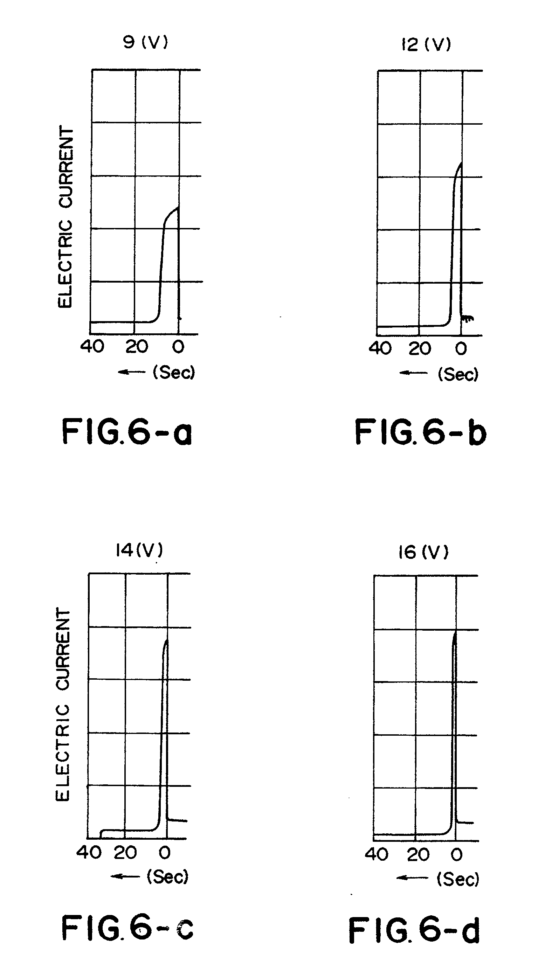

The change of a circuit current with the passage of time in the motor in the embodiment of Fig. 5 is recorded in the same manner as shown in the embodiment of Fig. 1. The result of the recording is shown in Fig. 6. Fig. 6-a shows data representing the change of a current with the passage of time in the case where the applied voltage is 9 V. Fig. 6-b shows data representing the change of a current with the passage of time (start 0 sec.) in the case where the applied voltage is 12 V. Fig. 6-c shows data representing the change of a current with the passage of time in the case where the applied voltage is 14 V. Fig. 6-d shows data representing the change of a current with the passage of time in the case where the applied voltage is 16 V. Compared with the result of the comparative example of Fig. 4, the response time for current limitation is greatly reduced to 2 Sec. (16 V) - 9 sec. (9 V). In the built-in method in this embodiment, the effect of heat binding with the brush is so remarkable that an improvement in response characteristic is observed.

(Embodiment 4)

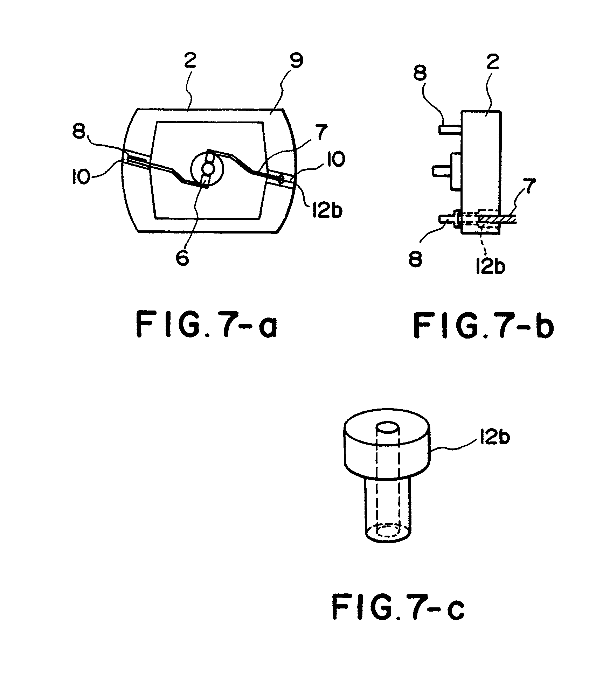

Fig. 7 is a partly structural explanatory view of a small-sized direct-current motor as an embodiment of the present invention (Claim 7). Fig. 7-a is a plan view showing the inside of the small housing. Fig. 7-b is a vertical sectional view of the small housing. Fig. 7-c is a perspective view showing the shape of the PTC thermistor used in this embodiment. In the drawing, the explanatory view of the small-sized direct-current motor is the same as shown in Figs. 2-a and 2-b.

A semicylinder-like PTC thermistor 12b shaped as shown in Fig. 7-c is embedded in a U-shaped groove 10 provided in the resin 9 stuck to the small housing 2 of the small-sized direct-current motor. As shown in Figs. 7-a and 7-b, the PTC thermistor 12b is fixed by connecting one electrode to an input terminal 8 and connecting the other electrode to a phosphorus bronze plate 7 connected to a brush 6, so that a small-sized direct-current motor with a built-in PTC thermistor is produced. Although above description is made on the case where a semicylinder-like PTC thermistor is used, the invention can be applied to the case where a cylinder-like PTC thermistor may be used. The PTC thermistor 12b has an internal diameter of 1mm, a small external diameter of 2mm, a large external diameter of 3.5mm, ordinary-temperature resistance of 1.8 Ω (resistivity of about 4 Ωcm) and switching temperature of 100 °C. Any one of the first, second and third PTC thermistors may be used as the PTC thermistor 12b. Further, in any case, the cylindrical shape can be attained easily.

The motor in the embodiment of Fig. 7 is subjected to the same examination as in the embodiments 2 and 3 to measure the change of a circuit current with the passage of time after the motor is locked by fixing the shaft 11. Though not shown, the result of the examination is the same as the data shown in Figs. 3 and

9

6. Comparing this result with the result of Fig. 4 representing the data of the comparative example 1, the response characteristic for current limitation is as excellent as that in the embodiments 2 and 3. The effect of heat binding is also produced by the built-in method in this embodiment, so that an improvement in response characteristic is attained.

As described above in detail with reference to the embodiments 2, 3 and 4, the small-sized direct-current motor according to the present invention is formed, as shown basically in Fig. 1, by: arranging a plate-like PTC thermistor or cylinder-like or semicylinder-like PTC thermistor shown in Fig. 7 at the position of an input terminal within the small housing; and connecting one electrode of the PTC thermistor to the input terminal and connecting the other electrode to a phosphorus bronze plate connected to a brush or connecting the other electrode to a terminal connected thereto. In the case where the small housing is made of a metal plate, an insulator such as a resin may be attached to the outside of the PTC thermistor to secure insulation from the built-in PTC thermistor.

Because the PTC thermistor is a heating element as described above and because the switching temperature of the PTC material adapted for protection of the overload of the motor is generally designed to be about 90 - 120 °C, the temperature of the PTC thermistor in a switching state, that is, in a current limiting state, becomes about 150 - 200 °C. In the case where a problem may arise in the heat-resisting property of the material for the small housing, an insulating plate being smaller in thermal conductivity may be provided in the outside of the PTC thermistor.

By this configuration, the PTC thermistor is disposed inside the motor, so that when an overload is imposed on the motor or in other words when the motor is locked while a predetermined voltage is applied between the two electrode terminals of the motor, the resistance of the PTC thermistor is increased by self-heating of the PTC thermistor caused by the overcurrent, to thereby limit the circuit current to protect the motor.

The aforementioned chip-like small PTC thermistor which can be disposed inside the small-sized direct-current motor can be attained first by producing the PTC thermistor from $BaTiO_3$ PTC ceramics provided by application of the producing method as described above in the embodiment 1. That is, a PTC thermistor being as thin and small in area as can be disposed inside a small-sized motor can be formed first when the ratio of withstanding voltage $V_B$ to ordinary-temperature resistivity $\rho_{25}$, that is, $V_B/\rho_{25}$, in the PTC thermistor used in the small-sized direct-current motor is increased to about 7 or more. On the other hand, the $V_S/\rho_{25}$ ratio in the conventional $BaTiO_3$ ceramics produced by a solid-phase reaction technique is about 3 - 6 as shown in the sample Nos. 1 - 4 in Table 1, so that a PTC thermistor being as small as can be disposed inside the small-sized motor used in the invention cannot be formed from this conventional material.

By the configuration of the small-sized direct-current motor based on the aforementioned means, the PTC thermistor can be provided without any lead wire, any solder and any mold material. Furthermore, the PTC thermistor can be electrically connected to the motor in a series and can be disposed inside the motor.

At the same time, by the configuration, the heat of the motor coil caused by the overcurrent, as well as the self-heat of the PTC, is transmitted to the PTC thermistor through the brush, when the motor is overloaded. Accordingly, the effect of improving more greatly the response characteristic in the switching operation of the PTC thermistor is produced by the effect of heat binding. On the contrary, when the current is limited, the effect of giving a radiator plate to the PTC thermistor is produced. Accordingly, because the heat radiating rate is increased, the multiple effect of improving more greatly the withstanding voltage of the PTC thermistor.

TABLE 1

| No. | x | y | z | Valence control agent (mol%) | Mn (mol%) | Si (mol%) | Curie point $T_C$ (°C) | Normal-temperature resistivity $\rho_{25}$ ($\Omega$ cm) | Voltage bearing $V_B$ (V/mm) | $V_B / \rho_{25}$ |
|---|---|---|---|---|---|---|---|---|---|---|
| 1 | 0.10 | 0.05 | 0.10 | Sb 0.24 | 0.04 | 0.3 | 120 | 128 | 300 | 2.3 |
| 2 | | | | | | 0.5 | 120 | 65 | 220 | 3.4 |
| 3 | | | | | | 1.0 | 120 | 40 | 200 | 5.0 |
| 4 | ↓ | ↓ | ↓ | ↓ | ↓ | 2.0 | 120 | 80 | 250 | 3.1 |
| 5 | 0.03 | 0.05 | 0.10 | Sb 0.24 | 0.04 | 0.3 | 128 | 4.3 | 60 | 14.0 |
| 6 | 0.05 | | | | | | 125 | 4.8 | 75 | 15.6 |
| 7 | 0.20 | | | | | | 80 | 5.6 | 85 | 15.2 |
| 8 | 0.25 | ↓ | ↓ | ↓ | ↓ | ↓ | 75 | 6.0 | 80 | 13.3 |
| 9 | 0.10 | 0.01 | 0.10 | 0.24 | 0.04 | 0.3 | 95 | 5.2 | 45 | 8.6 |
| 10 | | 0.03 | | | | | 105 | 5.5 | 85 | 15.5 |
| 11 | | 0.20 | | | | | 150 | 8.0 | 120 | 15.0 |
| 12 | ↓ | 0.25 | ↓ | ↓ | ↓ | ↓ | 180 | 20 | 150 | 7.5 |
| 13 | 0.10 | 0.05 | 0.03 | 0.24 | 0.04 | 0.3 | 120 | 3.8 | 30 | 7.9 |
| 14 | | | 0.05 | | | | 120 | 4.5 | 65 | 14.4 |
| 15 | | | 0.15 | | | | 120 | 5.2 | 85 | 16.3 |
| 16 | ↓ | ↓ | 0.20 | ↓ | ↓ | ↓ | 120 | 18 | 170 | 9.4 |
| 17 | 0.10 | 0.05 | 0.10 | Sb 0.18 | 0.04 | 0.3 | 120 | 18 | 160 | 8.8 |
| 18 | | | | 0.20 | | | 120 | 5.5 | 90 | 16.4 |
| 19 | | | | 0.30 | | | 120 | 6.0 | 100 | 16.7 |
| 20 | | | | 0.50 | | | 120 | 10 | 130 | 13 |
| 21 | ↓ | ↓ | ↓ | 0.60 | ↓ | ↓ | 120 | 26 | 220 | 8.5 |
| 22 | 0.10 | 0.05 | 0.10 | 0.24 | 0.01 | 0.3 | 120 | 3.5 | 30 | 8.6 |
| 23 | | | | | 0.02 | | 120 | 4.2 | 60 | 14.3 |
| 24 | | | | | 0.04 | | 120 | 5.0 | 80 | 16 |
| 25 | | | | | 0.08 | | 120 | 10 | 180 | 18 |
| 26 | ↓ | ↓ | ↓ | ↓ | 0.10 | ↓ | 120 | 20 | 180 | 9 |
| 27 | 0.10 | 0.05 | 0.10 | 0.24 | 0.04 | 0 | 120 | 8 | 120 | 15.0 |
| 28 | | | | | | 0.1 | 120 | 7 | 110 | 15.7 |
| 29 | | | | | | 0.4 | 120 | 5.3 | 80 | 16.7 |
| 30 | | | | | | 0.5 | 120 | 12 | 190 | 15.8 |
| 31 | ↓ | ↓ | ↓ | ↓ | ↓ | 1.0 | 120 | 28 | 320 | 11.4 |
| 32 | 0.10 | 0.05 | 0.10 | Y 0.4 | 0.04 | 0.3 | 120 | 6 | 95 | 15.8 |
| 33 | ↓ | ↓ | ↓ | La 0.4 | ↓ | ↓ | 120 | 5 | 80 | 16.0 |

## Claims

1. A small-sized direct-current motor in which a PTC thermistor made of a BaTiO₃ ceramic material with the ratio $V_B/\rho_{25}$ of a withstanding voltage $V_B$ to an ordinary-temperature resistivity $\rho_{25}$ in a range of from 7 to 20 is connected to an armature coil in a series, said PTC thermistor being disposed within a motor housing.

2. A small-sized direct-current motor according to Claim 1, in which:
the BaTiO₃ ceramic PTC thermistor contains a main component represented by the formula $(Ba_{1-x-y-z}Sr_xPb_yCa_z)TiO_3$, at least one element selected from the group consisting of Sb, Bi, Nb, Ta and rare-earth elements as a valence control agent in an amount of from 0.2 to 1.0 mole % relative to one mole of the main component, Mn in an amount of from 0.02 to 0.08 mole % relative to one one mole of the main component, and Si in an amount of 3.0 mole % or smaller relative to one mole of the main component; and
the main component is a PTC ceramic composition consisting of 1-x-y-z : x y : z mixture of BaTiO₃, SrTiO₃, PbTiO₃ and CaTiO₃ respectively synthesized by a liquid-phase solution reaction technique, in which $\underline{x}$, $\underline{y}$ and $\underline{z}$ satisfy the ranges $0.02 \leq x \leq 0.25$, $0.01 \leq y \leq 0.3$ and $0.02 \leq z \leq 0.25$ respec-

tively.

3. A small-sized direct-current motor according to Claim 1, in which:

the BaTiO$_3$ ceramic PTC thermistor contains a main component represented by the formula $(Ba_{1-x-y-z}Sr_xPb_yCa_z)TiO_3$, at least one element selected from the group consisting of Sb, Bi, Nb, Ta and rare-earth elements as a valence control agent in an amount of from 0.2 to 1.0 mole % relative to one mole of the main component, Mn in an amount of from 0.02 to 0.08 mole % relative to one mole of the main component, and Si in an amount of 3.0 mole % or smaller relative to one mole of the main component; and

the main component is a PTC ceramic composition directly synthesized by a liquid-phase solution reaction technique, in which $x$, $y$ and $z$ satisfy the ranges $0.02 \leq x \leq 0.25$, $0.01 \leq y \leq 0.3$ and $0.02 \leq z \leq 0.25$ respectively.

4. A small-sized direct-current motor according to Claim 1, in which:

the BaTiO$_3$ ceramic PTC thermistor contains a main component represented by the formula $(Ba_{1-x-y-z-a}Sr_xPb_yCa_zM_a)TiO_3$ or the formula $(Ba_{1-x-y-z}Sr_xPb_yCa_z)(Ti_{1-a}M_a)O_3$, at least one element selected from the group consisting of Sb, Bi, Nb, Ta and rare-earth elements as a valence control agent M in an amount of from 0.2 to 1.0 mole % relative to one mole of the main component, Mn in an amount of from 0.02 to 0.08 mole % relative to one one mole of the main component, and Si in an amount of 3.0 mole % or smaller relative to one mole of the main component; and

the main component is a PTC ceramic composition directly synthesized by a liquid-phase solution reaction technique, in which $x$, $y$, $z$ and $a$ satisfy the ranges $0.02 \leq x \leq 0.25$, $0.01 \leq y \leq 0.3$, $0.02 \leq z \leq 0.25$ and $0.002 \leq a \leq 0.005$ respectively.

5. A small-sized direct-current motor according to Claim 1, in which the PTC thermistor is provided as a plate-like PTC thermistor having electrodes on both sides and being arranged between one of phosphorus bronze plates respectively connected to small-sized direct-current motor brushes and one of input terminals.

6. A small-sized direct-current motor according to Claim 1, in which the PTC thermistor is provided as a PTC thermistor having electrodes on both ends and being inserted/stuck in between one of small-sized direct-current motor brushes and one of phosphorus bronze plates respectively connected to input terminals.

7. A small-sized direct-current motor according to Claim 1, in which the PTC thermistor is provided as a cylinder-like PTC thermistor having electrodes on both end surfaces and being embedded in a terminal board of the small-sized direct-current motor, so that one of the electrodes is connected to one of input terminals, and the other electrode is connected to one of phosphorus bronze plates respectively connected to brushes or is connected to a terminal connected thereto.

12

FIG.1-a

FIG.1-b

FIG.1-c

FIG.2-a

FIG.2-b

EP 0 454 857 A1

FIG.3-a    FIG.3-b    FIG.3-c    FIG.3-d

FIG.4-a    FIG.4-b    FIG.4-c    FIG.4-d

14

FIG.5-a

FIG.5-b

FIG.5-c

9 (V)

ELECTRIC CURRENT

40　20　0

← (Sec)

# FIG.6-a

12 (V)

40　20　0

← (Sec)

# FIG.6-b

14(V)

ELECTRIC CURRENT

40　20　0

← (Sec)

# FIG.6-c

16 (V)

40　20　0

← (Sec)

# FIG.6-d

**FIG.7-a**

**FIG.7-b**

**FIG.7-c**

ADDITION OF VALENCE SUPPRESSING AGENT AND SINTERING AGENT

| | |
|---|---|
| PREPARATION OF RAW-MATERIAL POWDER | 10 |
| MIXING WITH SOLUTION | 11 |
| ALKALI ADDITION | 12 |
| PRECIPITATION | 13 |
| DRYING | 14 |
| WEIGHING | 15 |
| SOLID-PHASE MIXING | 16 |
| MOLDING | 17 |
| PREPARATORY BURNING | 18 |
| PULVERIZATION | 19 |
| MOLDING | 20 |
| BURNING | 21 |

# F I G. 8

ADDITION OF VALENCE SUPPRESSING AGENT AND SINTERING AGENT

| | |
|---|---|
| PREPARATION OF RAW-MATERIAL POWDER | 30 |
| MIXING WITH SOLUTION | 31 |
| ALKALI ADDITION | 32 |
| COPRECIPITATION | 33 |
| DRYING | 34 |
| WEIGHING | 35 |
| SOLID-PHASE MIXING | 36 |
| MOLDING | 37 |
| PREPARATORY BURNING | 38 |
| PULVERIZATION | 39 |
| MOLDING | 40 |
| BURNING | 41 |

# F I G. 9

ADDITION OF VALENCE SUPPRESSING AGENT

ADDITION OF SINTERING AGENT

| | |
|---|---|
| PREPARATION OF RAW-MATERIAL POWDER | 50 |
| MIXING WITH SOLUTION | 51 |
| ALKALI ADDITION | 52 |
| COPRECIPITATION | 53 |
| DRYING | 54 |
| WEIGHING | 55 |
| SOLID - PHASE MIXING | 56 |
| MOLDING | 57 |
| PREPARATORY BURNING | 58 |
| PULVERIZATION | 59 |
| MOLDING | 60 |
| BURNING | 61 |

# FIG. 10

# INTERNATIONAL SEARCH REPORT

International Application No PCT/JP90/01447

## I. CLASSIFICATION OF SUBJECT MATTER (if several classification symbols apply, indicate all) 6

According to International Patent Classification (IPC) or to both National Classification and IPC

Int. Cl$^5$  H01C7/02, H02K11/00

## II. FIELDS SEARCHED

### Minimum Documentation Searched 7

| Classification System | Classification Symbols |
|---|---|
| IPC | H01C7/02, H02K11/00 |

### Documentation Searched other than Minimum Documentation to the Extent that such Documents are Included in the Fields Searched 8

| | |
|---|---|
| Jitsuyo Shinan Koho | 1965 - 1990 |
| Kokai Jitsuyo Shinan Koho | 1971 - 1990 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 63-312616 (Marukon Denshi K.K.), December 21, 1988 (21. 12. 88), (Family: none) | 1-4 |
| Y | JP, A, 63-110601 (Matsushita Electric Ind. Co., Ltd.), May 16, 1988 (16. 05. 88), (Family: none) | 2-4 |
| Y | JP, A, 63-210057 (Nippondenso Co., Ltd.), August 31, 1988 (31. 08. 88), (Family: none) | 2-4 |
| Y | JP, A, 63-215545 (Nippondenso Co., Ltd.), September 8, 1988 (08. 09. 88), (Family: none) | 2-4 |
| A | JP, A, 61-173648 (Mitsubishi Electric Corp.), August 5, 1986 (05. 08. 86), (Family: none) | 1, 5-7 |
| A | JP, U, 55-51627 (Suzuki Jidosha Kogyo K.K.), April 5, 1980 (05. 04. 80), (Family: none) | 1, 5-7 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| January 16, 1991 (16. 01. 91) | January 28, 1991 (28. 01. 91) |

| International Searching Authority | Signature of Authorized Officer |
|---|---|
| Japanese Patent Office | |

Form PCT/ISA/210 (second sheet) (January 1985)